(19) Europäisches Patentamt
European Patent Office
Office européen des brevets

(11) **EP 2 158 411 B1**

(12) **EUROPÄISCHE PATENTSCHRIFT**

(45) Veröffentlichungstag und Bekanntmachung des Hinweises auf die Patenterteilung:
**07.05.2014   Patentblatt 2014/19**

(51) Int Cl.:
***F16C 32/04*** *(2006.01)*

(21) Anmeldenummer: **07820795.8**

(22) Anmeldetag: **02.10.2007**

(86) Internationale Anmeldenummer:
**PCT/EP2007/060413**

(87) Internationale Veröffentlichungsnummer:
**WO 2008/154962 (24.12.2008 Gazette 2008/52)**

(54) **MAGNETLAGERSTEUEREINRICHTUNG MIT EINEM DREIPHASIGEN UMRICHTER SOWIE VERWENDUNG EINES DREIPHASIGEN UMRICHTERS ZUR STEUERUNG EINES MAGNETLAGERS**

MAGNETIC BEARING CONTROL DEVICE COMPRISING A THREE-PHASE CONVERTER, AND USE OF A THREE-PHASE CONVERTER FOR CONTROLLING A MAGNETIC BEARING

DISPOSITIF DE COMMANDE DE PALIER MAGNÉTIQUE À CONVERTISSEUR TRIPHASÉ ET UTILISATION D'UN CONVERTISSEUR TRIPHASÉ POUR ASSURER LA COMMANDE D'UN PALIER MAGNÉTIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **20.06.2007   DE 102007028229**

(43) Veröffentlichungstag der Anmeldung:
**03.03.2010   Patentblatt 2010/09**

(73) Patentinhaber: **Siemens Aktiengesellschaft 80333 München (DE)**

(72) Erfinder:
• **DENK, Joachim
  90419 Nürnberg (DE)**
• **KÖPKEN, Hans-Georg
  91056 Erlangen (DE)**
• **STOIBER, Dietmar
  90763 Fürth (DE)**
• **WEDEL, Bernd
  91096 Möhrendorf (DE)**

(56) Entgegenhaltungen:
EP-A- 0 989 315          EP-A- 1 158 648
WO-A- 97/07341           DE-A1- 10 019 761
DE-A1- 10 353 101        JP-A- 8 145 056
US-A- 3 937 533

• YIM J-S ET AL: 'A Novel Cost-Effective Scheme of Power Amplifier for AMB Using Space Vector Technology', [Online] Nr. 8TH, 26 August 2002, Seiten 101 - 105, XP003030893 PROCEEDINGS OF THE INTERNATIONAL SYMPOSIUM ON MAGNETIC BEARINGS, XX, XX Gefunden im Internet: <URL:https://getinfo.de/app/A-Novel-Cost-Ef fective-Scheme-of-Power-Amplifier/id/ BLCP%3 ACN061327676>

**Beschreibung**

Die Erfindung betrifft die Verwendung eines dreiphasigen Umrichters zur Magnetlagersteuerung.

Für aktiv geregelte magnetische Lagerungen werden Elektromagnete eingesetzt. Hierfür werden eine Vormagnetisierung und eine schnelle Regelung des kraftbildenden Stroms zur Stabilisierung der Lage benötigt.

Für derartige Magnetlager sind im Wesentlichen zwei Ausprägungen bekannt:

Zum einen gibt es Magnetlager mit einer Vormagnetisierungswicklung, mittels welcher ein Grundmagnetfeld erzeugbar ist. Dabei existiert weiterhin eine Steuererregerwicklung, mittels welcher eine gewünschte Kraft, auf die der zu lagernde Gegenstand mittels Regelungstechnik aufgeprägt wird.

Ferner existieren Magnetlager ohne Grunderregerwicklung, also ohne Wicklungen, mittels welcher eine Vormagnetisierung eingestellt werden kann. Die dabei zum Einsatz kommende Regelungstechnik basiert im Wesentlichen auf der so genannten Differenzansteuerung.

Bei bekannten Magnetlagern mit getrennter Grunderregerwicklung und Steuererregerwicklung wird das Vormagnetisierungsfeld durch einen Konstantstrom erzeugt, der üblicherweise von einem ersten Leistungsverstärker generiert wird. Eine Feldverstärkung bzw. Feldschwächung des Vormagnetisierungsfeldes wird durch einen Strom in der Steuererregerwicklung realisiert, welcher üblicherweise durch einen zweiten Leistungsverstärker generiert wird.

Wenn nun beispielsweise an einer Magnetspindel eine Zahl N an Magnetlagern eingesetzt wird, so kann der Vormagnetisierungsstrom für alle N Magnetlager durch den ersten Leistungsverstärker aufgebracht werden, folglich werden hier insgesamt N+1 Leistungsverstärker benötigt.

Wie eingangs erwähnt, wird bei handelsüblichen Magnetlagern ohne Grunderregerwicklung eine Differenzansteuerung vorgenommen, wobei pro Magnetlager zwei Leistungsverstärker und damit insgesamt 2 x N Leistungsverstärker benötigt werden.

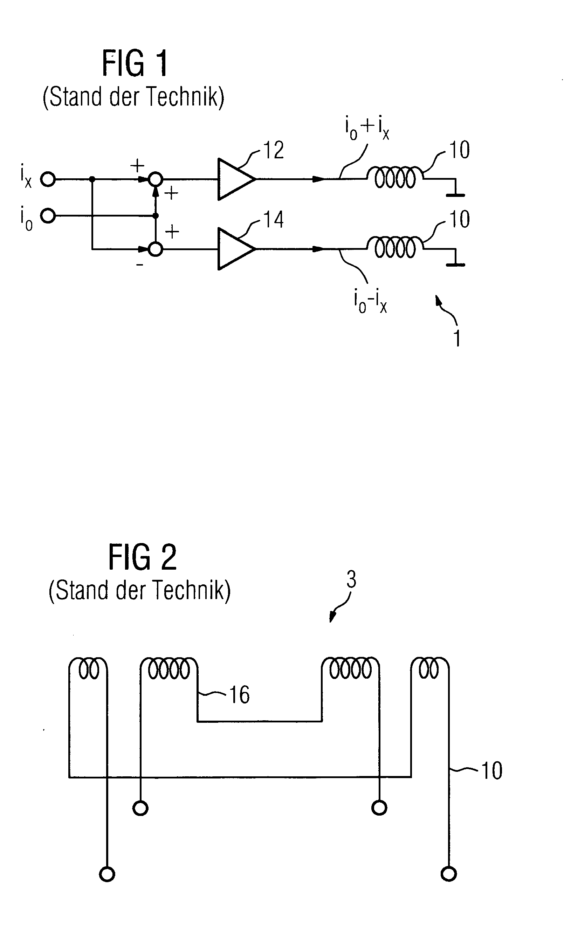

In den Figuren 1 und 2 sind eine Differenzansteuerung eines Magnetlagers dargestellt bzw. ein Magnetlager mit sowohl Grunderregerwicklung als auch Steuererregerwicklung.

Figur 1 zeigt hierbei zwei Leistungsverstärker 12, 14, mittels welcher die Differenzansteuerung der Steuererregungswicklung 10 realisiert wird. Dazu wird ein Vormagnetisierungsstrom $i_0$ auf beide Leistungsverstärker 12, 14 gegeben und im Falle des ersten Leistungsverstärkers 12 hierzu der Steuerstrom $i_x$ addiert, und im Falle des zweiten Leistungsverstärkers 14 der Steuerstrom $i_x$ vom Vormagnetisierungsstrom $i_0$ subtrahiert.

Dadurch wird bei der Differenzansteuerung gemäß Figur 1 der Konstantstrom $i_0$ als Vormagnetisierungsstrom in beide Spulen der Steuererregungswicklung 10 eingeprägt. Dieser Strom sei beispielhaft 10 Ampere. Er fließt gleichermaßen in beiden Spulen, so dass die Durchflutung der ersten Spule gleich derjenigen der zweiten Spule ist. Physikalisch sind die beiden Spulen meist vertikal übereinander angeordnet. Soll nun eine Kraft auf einen zwischen den Spulen befindlichen Gegenstand, wie z.B. eines Rotors, ausgeübt werden, so muss die Durchflutung in einer der Spulen erhöht und in der anderen erniedrigt werden. Dies geschieht durch den Steuerstrom, welcher durch Addition zum Vormagnetisierungsstrom die Durchflutung in der einen Spule erhöht und durch Subtraktion vom Vormagnetisierungsstrom die Durchflutung in der anderen Spule erniedrigt. Wenn der Steuerstrom beispielsweise 2 Ampere beträgt, dann führt die erste Spule einen Strom von 12 Ampere, während die zweite Spule lediglich 8 Ampere führt. Dadurch wird das Magnetfeld in der ersten Spule gegenüber dem Magnetfeld der zweiten Spule deutlich verstärkt, und die Kraftwirkung beispielsweise nach oben, vergrößert. Dadurch lassen sich gewünschte Kräfte auf den zu lagernden Gegenstand zwischen den Spulen mittels des Steuerstroms einstellen. Das Magnetlager 1 der Figur 1 basiert regelungstechnisch somit auf einer gezielten Erhöhung der einen Spule bzw. damit einhergehenden gezielten Erniedrigung des Magnetfelds der anderen Spule der Steuererregungswicklung 10.

Figur 2 zeigt schematisch ein weiteres bekanntes Magnetlager 3, ausgebildet als Magnetlager mit sowohl Grunderregerwicklung 16 als auch Steuererregungswicklung 10.

Im Unterschied zur Ausführungsform gemäß Figur 1 wird hierbei ein zusätzlicher Leistungsverstärker benötigt, um den Vormagnetisierungsstrom für die Grunderregungswicklung 16 zu generieren. Jedoch ist der Aufwand an benötigten Leistungsverstärkern im Vergleich zur Ausführungsform gemäß Figur 1 umso niedriger, je mehr Magnetlager pro Anwendung vorgesehen sind, da der Vormagnetisierungsstrom aller verwendeten Magnetlager üblicherweise durch einen einzigen Leistungsverstärker erzeugt werden kann.

Zum Betrieb von bekannten Magnetlagern werden also bisher spezielle und damit teure Leistungsverstärker und zugehörige Regler benötigt.

Eine Alternative zu derartigen Leistungsverstärkern ist in der Offenlegungsschrift DE 10 2004 024 883 A1 offenbart, wobei Magnetlager auch mit Standardumrichtern im Werkzeugmaschinenumrichterverband bedient werden können.

Dabei werden aber lediglich zwei Phasen des Umrichters zur Ansteuerung der Magnetlager verwendet. Somit sind im Falle von N Magnetlagern mit Vormagnetisierungswicklungen N+1 Umrichter zur Ansteuerung des Magnetlagersystems notwendig. Falls diese Magnetlager keine Vormagnetisierungswicklungen tragen, sind 2 x N Umrichter notwendig.

Die vorliegende Erfindung zielt jedoch hauptsächlich auf Differenzansteuerung <u>zweier</u> Magnetspulen pro Freiheitsgrad des Magnetlagers ab. So führt die vorliegende Erfindung im Falle eines Magnetlagers mit gewünschten zwei Freiheitsgraden z.B. auf den Einsatz von zwei dreiphasigen Umrichtern, welche jeweils ein Magnetspulenpaar ansteuern. Eine Vormagnetisierung kann dabei entfallen. Ferner bezieht sich die Erfindung bevorzugt auf Axiallager, nicht auf Radiallager.

Neben dem genannten Stand der Technik der Anmelderin ist aus der WO 97/07341 eine radiale aktive magnetische Lagervorrichtung bekannt, wobei drei verteilte Elektromagnete vorgesehen sind und eine Vormagnetisierung erforderlich ist.

Jeder der drei Elektromagneten weist eine Steuerspule und eine Vormagnetisierungsspule auf. Zur Steuerung der drei Elektromagneten wird ein konventioneller, dreiphasiger Drehstromsteller verwendet. Die drei Phasenströme des Drehstromstellers werden dabei jeweils zur Steuerung eines der drei Elektromagneten herangezogen. Die drei Steuerspulen sind dazu in einer Sternschaltung oder Dreieckschaltung miteinander verbunden, wobei die drei Phasenströme des Drehstromstellers den Spulen zugeführt sind. Die drei eine Vormagnetisierung bewirkenden Spulen sind in Serie geschaltet und von einem gemeinsamen Strom durchflossen.

Weiter ist aus der WO 97 07 341 A ein axiales Magnetlager mit zwei jeweils eine Spule aufweisenden Elektromagneten bekannt. Die Steuereinrichtung der beiden Spulen wird durch einen dreiphasigen Drehstromsteller mit drei Phasenstromausgängen zur Steuerung des axialen Magnetlagers gebildet. Alle drei Phasenströme des Drehstromstellers werden zur Steuerung des axialen Magnetlagers verwendet, indem eine erste Magnetspule an den ersten und dritten Phasenstromausgang des Drehstromstellers und die gegenüberliegende zweite Magnetspule an den ersten und den zweiten Phasenstromausgang des Drehstromstellers angeschlossen sind. Der Drehstromsteller erzeugt aus den drei Phasenströmen sowohl einen konstanten Strom als auch einen variablen Strom zur Differenzansteuerung des Spulenpaares.

Eine ähnliche Steuereinrichtung ist aus dem Dokument JP 08 145 056 A in Verbindung mit einem radialen Magnetlager mit einem oberen und einem unteren Magnetanker bekannt.

Ausgehend vom Stand der Technik liegt der vorliegenden Erfindung die Aufgabe zugrunde, eine Magnetlagersteuerung mittels eines Umrichters effizienter zu gestalten, wobei insbesondere der Aufwand an benötigten Umrichtern reduziert und unerwünschte Auswirkungen auf den Stromregler infolge der Asymmetrie beseitigt werden soll.

Erfindungsgemäß wird die Aufgabe durch die Verwendung eines dreiphasigen Umrichters zur Steuerung eines Magnetlagers mit den Merkmalen des Anspruchs 1 gelöst.

Die Erfindung geht dabei von der Überlegung aus, dass ein an sich bekannter dreiphasiger Umrichter sich nicht nur zur Erzeugung von Drehfeldern für Drehstrommotoren eignet, sondern dass die drei erzeugbaren Phasenströme des Umrichters auch anderweitig eingesetzt werden können:

Bei der vorliegenden Erfindung liegt nun ein Kerngedanke darin, die drei Phasenstromausgänge des Umrichters als zwei unabhängig voneinander erzeugbare Ströme in Form einer Differenzansteuerung bei einem Magnetlager einzusetzen.

Im Folgenden wird nun erklärt, wie dies realisiert werden kann.

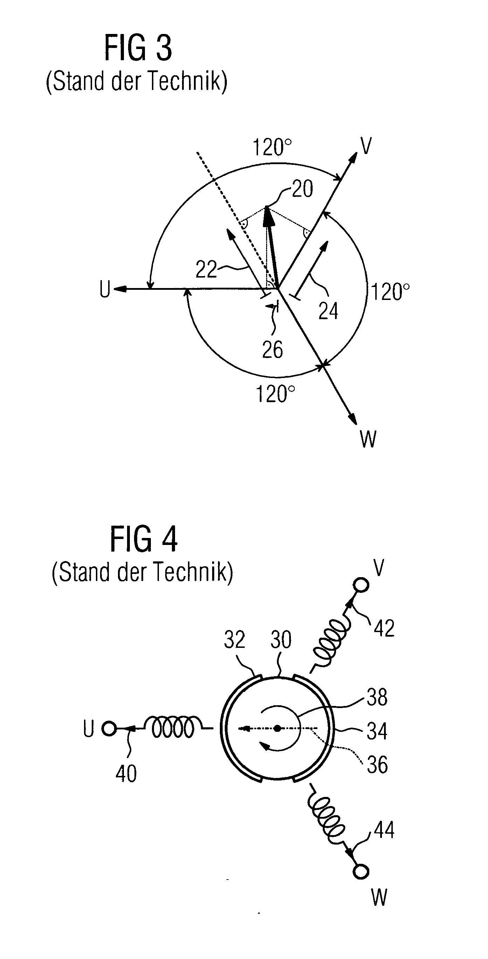

Bekannte Umrichter nach dem Stand der Technik sind für den Betrieb von dreiphasigen Drehstrommotoren ausgelegt. Dabei wird ein Drehstromvektor erzeugt, der im Umrichter als Rechengröße vorliegt und auf die drei Phasen U, V und W des Umrichters verteilt wird. In Figur 3 ist beispielhaft ein derartiger Drehstromvektor 20 dargestellt. Diese Rechengröße Drehstromvektor 20 wird im Koordinatensystem des Umrichters durch Länge und Winkel von Stromvektorkomponenten 22, 24 und 26 beschrieben, wobei sich der jeweilige Winkel der Stromvektorkomponenten auf das umrichterfeste Phasensystem U, V und W bezieht. Die Stromvektorkomponenten 22, 24 und 26 sind hierbei die Projektionen des Stromvektors 20 in die Richtungen U, V bzw. W. Diese einzelnen Phasenströme sind folglich Skalare, welche sich aus der genannten Projektion des Stromvektors 20 auf den Richtungszeiger der jeweiligen Phase ergeben. Die drei Richtungszeiger des Drehstromsystems U, V und W sind untereinander jeweils um 120° versetzt, so dass sie zueinander gleiche Winkel einschließen. Projektionen, die in die Richtung des jeweiligen Richtungszeigers weisen, werde als positiv gewertet. Wenn die Projektionen entgegen des Richtungszeigers weisen, werden sie als negativ gewertet. Bei einem idealisierten Drehstromsystem ergibt sich aus der geometrischen Konstruktion der Phasenströme, dass deren Summe stets verschwindet, also gleich Null ist. Das Verschwinden der Phasenstromsumme ist ein wesentliches Kennzeichen jedes Drehstromsystems.

In der Figur 4 wird nun schematisch ein permanenterregter Synchronmotor dargestellt, welcher von einem Umrichter betrieben wird. Dieser Motor soll der Einfachheit halber ein Magnetpolpaar besitzen. Dem Motor ist hierbei ein Rotor 30 zugeordnet. Das besagte Polpaar umfasst einen magnetischen Nordpol 32 sowie einen magnetischen Südpol 34. Dieses Polpaar sei fest am Rotor verankert. Es ist in sich starr und dreht sich mit dem Rotorwinkel. Dem Polpaar kann man eine magnetische Achse 36 zuordnen, welche in der Figur 4 vom magnetischen Südpol 34 zum magnetischen Nordpol 32 weist. Eine Drehrichtung 38 beschreibt die Drehung des Rotors verursacht durch ein von außen angelegtes Drehfeld, welches auf das Polpaar wirkt.

Der Ständer des Motors (hier nicht näher dargestellt) umfasst drei ortsfeste Spulen, die in einem Winkel von 120° angeordnet sind. Im vorliegenden Schaubild der Figur 4 seien die Spulen in Sternschaltung geschaltet, wobei der Sternpunkt nicht näher dargestellt ist. Jeder Spule ist eine Phase des Umrichters zugeordnet. Durch die drei Spulen fließen die vom Umrichter erzeugten Phasenströme 40, 42 und 44. Hierbei erzeugt dann jede Spule ein Magnetfeld, dessen Stärke durch die Größe des jeweiligen Phasenstromes gegeben ist. Die Orientierung des Feldes wird durch das Vorzeichen des jeweiligen Phasenstromes bestimmt. So überlagern sich die drei Felder der Spulen und es entsteht im Inneren des Ständers ein resultierendes Feld, das in Stärke und Ausrichtung der eingangs genannten Rechengröße Drehstromvektor entspricht.

Beim Betrieb des Synchronmotors wird die Richtung des Stromvektors dem Winkel der magnetischen Achse 36 des Rotors exakt so nachgeführt, dass die Rechengröße Stromvektor und die magnetische Achse 36 des Rotors 30 einen definierten Winkel zueinander bilden. Von den theoretisch möglichen Winkeln, die der Stromvektor zur magnetischen Achse einnehmen kann, sind zwei Winkel besonders ausgezeichnet:

1. Der Stromvektor, der in Richtung der magnetischen Achse zeigt.

Diese Ausrichtung des Stromvektors erzeugt kein Drehmoment und wird als d-Strom bezeichnet. Bekanntlich richtet sich eine drehbare magnetische Achse (z.B. eine Kompassnadel) in die Richtung der Feldlinien eines äußeren Magnetfelds aus. In diesem Fall ist aber die in Figur 4 dargestellte drehbare magnetische Achse bereits vollständig zum äußeren Feld ausgerichtet, so dass die magnetische Achse keine weitere Drehung ausführen wird.

2. Der Stromvektor, der senkrecht (90°) zur magnetischen Achse 26 steht.

Diese Ausrichtung erzeugt maximales Drehmoment und wird als q-Strom bezeichnet. Je größer der eingeschlossene Winkel zwischen dem äußeren Feld und der drehbaren magnetischen Achse ist, desto größer ist das wirkende Drehmoment. Mathematisch wird das Drehmoment über den Kosinus des eingeschlossenen Winkels beschrieben. Das größte Drehmoment ergibt sich daher, wenn der eingeschlossene Winkel 90° beträgt.

Die beiden beschriebenen, besonders ausgezeichneten Richtungen d und q des Stromvektors, stehen senkrecht aufeinander. Die eine Richtung, der d-Strom, erzeugt kein Drehmoment, wohingegen die andere Richtung, der q-Strom, ein Drehmoment erzeugt. Obwohl der d-Strom kein Drehmoment erzeugt, ist er dennoch von Bedeutung für den Betrieb eines Synchronmotors: Ein negativer d-Strom (welcher entgegen der magnetischen Achse zeigt) mindert die Klemmenspannung des Motors. Er wird in der Fachliteratur daher oft als feldschwächender Strom oder kurz Feldschwächstrom bezeichnet.

Es hat sich als günstig herausgestellt, einen beliebigen Stromvektor als Linearkombination aus einem d- und einem q-Strom aufzufassen. Diese d- und q-Ströme können als Rechengrößen aufgefasst werden, die einzeln, gemäß dem vorangegangenen Schaubild der Figur 4, auf die drei Phasen U, V und W verteilt werden.

Nach dem Stand der Technik wird ein Motor für die Erzeugung von Drehmoment genutzt. Deshalb wird der Synchronmotor im Basisdrehzahlbereich so betrieben, dass der d-Anteil des Stromvektors zu Null ausgesteuert ist. Mit dem q-Strom wird ein gewünschtes Drehmoment eingestellt. Bei hohen Drehzahlen wird zusätzlich ein (negativer) d-Strom ausgesteuert, mit dem die Klemmenspannung des Motors auf das gewünschte Maß reduziert wird. Beim Betrieb eines Synchronmotors nach dem Stand der Technik übernehmen die d- und q-Ströme unterschiedliche und voneinander entkoppelte Funktionen und werden deshalb unabhängig voneinander ausgesteuert.

Diese Möglichkeit, die genannten Ströme unabhängig voneinander zu erzeugen, wird bei der vorliegenden Erfindung ausgenutzt, um die für die Differenzansteuerung eines Magnetlagers erforderlichen zwei unabhängigen Ströme zu generieren.

Bei der Ansteuerung eines Motors durch einen Umrichter hingegen werden die d- und q-Ströme stets synchron zum Rotorwinkel ausgerichtet, d.h. synchron zu magnetischen Achse nachgeführt. Hierzu stehen dem Umrichter Informationen über die aktuelle Ausrichtung der magnetischen Achse, auch Rotorlagewinkel genannt, zur Verfügung.

Um im Folgenden die Verwendung des Umrichters zur Ansteuerung eines Magnetlagers zu erläutern, werde nun angenommen, dass der Rotor des Motors still stehe. Die magnetische Achse sei dabei, wie in Figur 4 gezeigt, in Richtung der Phase U ausgerichtet. Der q-Strom, also der drehmomentbildende Stromvektor, stehe senkrecht zur magnetischen Achse und bildet somit mit der Ständerachse in Richtung der Phase U einen rechten Winkel.

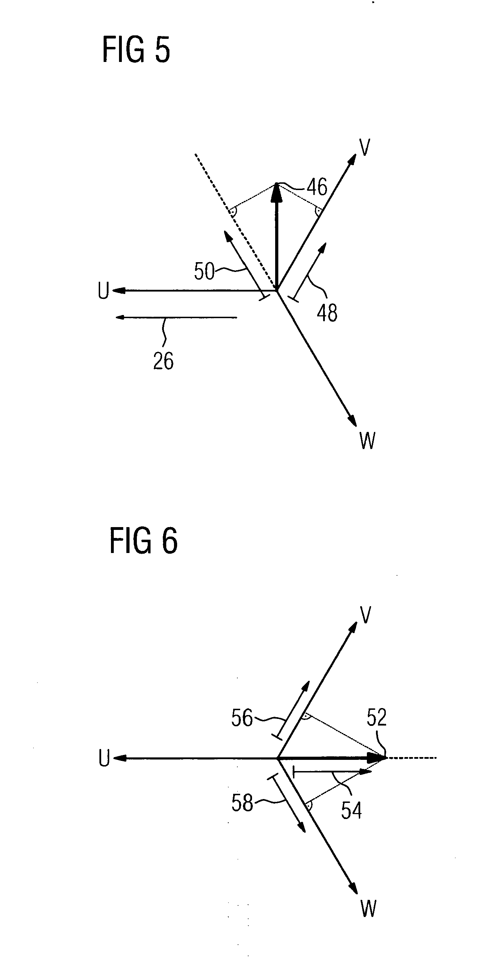

Somit ergibt sich die in der Figur 5 dargestellte Situation.

Bei derart eingefrorener Position der magnetischen Achse 36 in Phasenrichtung U, welche der Richtung der Phasenspule U des Ständers des Motors entspricht, verteilt sich der q-Strom nur auf die beiden anderen Phasen V und W. Da der q-Strom hierbei senkrecht zur U-Achse steht, verschwindet dessen Projektion auf die U-Achse. Hingegen hat der Phasenstrom W stets ein entgegengesetztes Vorzeichen relativ zum Phasenstrom V. Also ergibt sich für den eingeprägten q-Strom:

$$(1) \qquad -i_W = i_V = \cos(30°) \cdot i_q$$

wobei

$i_U = 0$ und $i_U + iv + i_W = 0$

Aus dem Stand der Technik DE 10 2004 024 883 A1 der Anmelderin ist es, wie erwähnt, bereits bekannt, die beiden Anschlüsse der Magnetlagerspule an die Phasenausgänge V und W des Umrichters anzuschließen. Die Rotorlageinformation des Umrichters wird per Hardware oder Software so eingefroren, dass für den Umrichter der Zustand entsteht, als ob die magnetische Achse fest und unveränderlich in die Richtung des Ständers, die Phasenrichtung U, zeigt. Der Regelkreis des Umrichters, der üblicherweise das Drehmoment und somit die Größe des q-Stromes regelt, steuert nun direkt die Stromstärke der Magnetlagerspule aus, wobei für die nicht angeschlossene Phase U wegen des eingefrorenen Rotorlagewinkels kein Stromsollwert ausgesteuert wird. Dadurch werden eventuelle Fehlermeldungen unterdrückt, die sonst gesetzt werden würden, wenn kein Strom fließt, obwohl am Umrichter ein entsprechender Stromsollwert für diese Phase anliegt. Diese Verwendung eines dreiphasigen Umrichters ist nach dem Stand der Technik bekannt, und zwar sowohl für die Ansteuerung von Magnetlagern mit Grunderregerwicklung als auch für Magnetlager mit Differenzansteuerung, welche keine Grunderregerwicklung aufweisen.

An diesen Stand der Technik knüpft nun die Erfindung weiter an.

Umrichter zur Ansteuerung von Elektromotoren schalten zur Aussteuerung des gewünschten Stromes eine pulsweitenmodulierte Spannung an die Phasenausgänge U, V und W des Umrichters. Wenn nun durch den Umrichter ein Magnetlager mit Grunderregerwicklung angesteuert werden soll, ergibt sich der Nachteil, dass alle Spulen des Magnetlagers über die Grunderregerwicklung miteinander transformatorisch verkoppelt sind. Dies ist unerwünscht, weil sich die Stromregler der einzelnen Magnetlagerumrichter über diese Verkopplung gegenseitig unerwünscht beeinflussen. Liegt jedoch ein Magnetlager mit Differenzansteuerung vor, so entfällt diese unerwünschte Verkopplung, wodurch die Stromregler der einzelnen Umrichter nicht gestört werden. Dabei ist aber besonders nachteilig, dass nun erheblich mehr Umrichter benötigt werden, nämlich 2 x N Umrichter, wobei N die Anzahl der Magnetlager ist.

Die vorliegende Erfindung beschäftigt sich nun insbesondere mit der Ausprägung des Magnetlagers als differenzangesteuertes Magnetlager, wobei die Grunderregerwicklung entfällt. Sie vermeidet dadurch den Nachteil der erhöhten Anzahl von Umrichtern, indem die Differenzansteuerung, die nach dem Stand der Technik von zwei einzelnen Umrichtern übernommen werden muss, auf einen einzigen Umrichter übertragen wird. Dies wird dadurch ermöglicht, indem dem d-Strom, der nach dem Stand der Technik zu Null geregelt ist, nun eine Funktion zugewiesen wird, und dieser nicht zu Null, sondern auf einen definierten Wert ausgesteuert wird.

Dies wird nun anhand der Figur 6 näher erläutert.

Dazu wird zunächst erklärt, wie sich ein d-Strom bei der vorgegebenen Rotorlage, wobei die magnetische Achse 36 in Richtung der Phase U zeigt, auf die einzelnen Phasen U, V, W verteilt. Der d-Strom werde in feldschwächender Richtung eingeprägt, so dass er gegen die magnetische Achse 36 und somit gegen die Phasenrichtung U zeigt.

Der eingeprägte feldschwächende d-Strom 52 liegt parallel zur Phasenrichtung U, so dass er sich vollständig, aber in umgekehrter Orientierung, in Richtung der Phase U projizieren lässt. Die Projektionen des d-Stromes in die Phasenrichtungen V und W ergeben genau den halben Betrag des erzeugenden d-Stromes. Für den eingeprägten d-Strom gilt dann:

$$(2) \qquad i_V = i_W = -\frac{1}{2} i_U = -\frac{1}{2} i_d,$$

wobei

$i_U + iv + i_W = 0.$

Bei der Differenzansteuerung eines Magnetlagerspulenpaares wird ein Konstantstrom und ein Differenzstrom in die beiden Spulen eingeprägt. Der Konstantstrom hat in beiden Spulen das gleiche Vorzeichen, während der Differenzstrom in den beiden Spulen unterschiedliches Vorzeichen hat. Nach dem Stand der Technik werden die Ströme erst rechnerisch addiert und dann als Sollwert je einem Verstärker zugeführt, so dass für jede der beiden Spulen ein separater Verstärker vorgesehen ist.

Dagegen setzt die vorliegende Erfindung darin an, einen einzigen dreiphasigen Umrichter zur Differenzansteuerung eines Magnetlagerspulenpaares zu verwenden, wobei der Konstantstrom von einem d-Strom, und der Differenzstrom von einem q-Strom desselben Umrichters ausgesteuert wird.

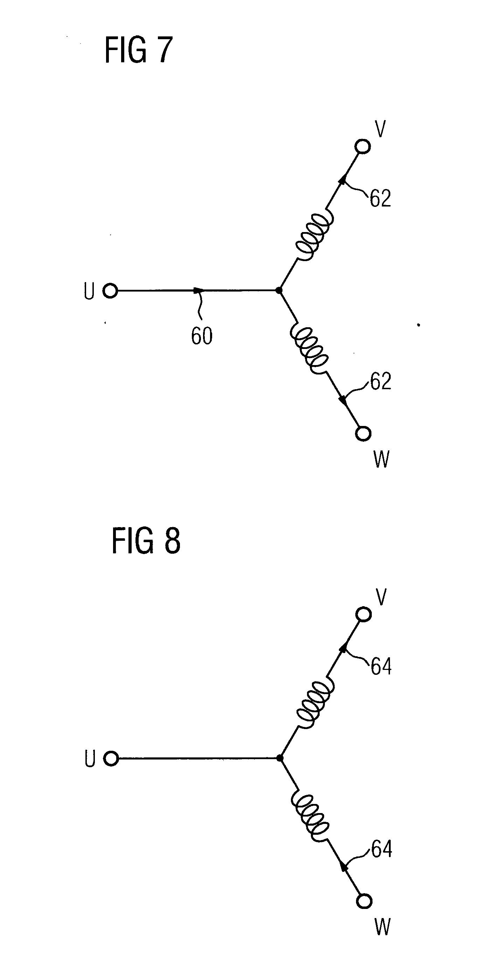

Die Spulen des Magnetlagers werden dabei jeweils mit einer Anschlussleitung an die Phase V bzw. W des Umrichters angeschlossen. Die beiden anderen Spulenanschlussleitungen werden miteinander verbunden und gemeinsam an die Phase U des Umrichters gelegt. Damit ergibt sich das folgende Anschlussbild, wie in den Figuren 7 und 8 dargestellt.

Zum besseren Verständnis wurde hierbei jeweils eine Darstellung für den d-Strom 60 (Figur 7) und für den q-Strom 64 (Figur 8) gewählt.

Anzumerken ist, dass das jeweils dargestellte Magnetlagerspulenpaar an einen einzigen dreiphasigen Umrichter angeschlossen ist. Die Separierung in beiden Figuren erfolgt lediglich der besseren Übersichtlichkeit halber.

In Figur 7 ist die Verteilung des d-Stromes 60 in den beiden Spulen des Magnetlagerspulenpaares dargestellt. Der d-Strom 60 erscheint jeweils zur Hälfte als (positiv gezählter) Strom in beiden Spulen.

Figur 8 zeigt die Verteilung des q-Stromes in den genannten Spulen des Magnetlagerspulenpaares. Der q-Strom erscheint in gleicher Stärke in der oben dargestellten Spule positiv und in der unten dargestellten Spule negativ. In den Figuren 7 und 8 soll eine positive Zählrichtung jeweils in Richtung der Phasen U, V und W in den Umrichter hinein gezählt werden.

Wenn nun der d-Strom als konstanter Strom eingeprägt wird und der q-Strom zum Aussteuern einer Kraftwirkung benutzt wird, dann sind alle Anforderungen erfüllt, die zu einer Differenzansteuerung eines Magnetlagers benötigt werden. Gemäß den Figuren 7 und 8 wird dem d-Strom die Funktion des Konstantstroms $i_0$ zugewiesen, und dem q-Strom obliegt die Steuerungsfunktion des eingangs dargestellten Stroms $i_x$, welcher in den beiden Spulen des Magnetlagerspulenpaares unterschiedliche Durchflutungen verursachen soll.

Eine erfindungsgemäße Differenzansteuerung eines Magnetlagers setzt voraus, dass sowohl der d-Strom als auch der q-Strom unabhängig voneinander generiert werden können. Dies kann mittels moderner dreiphasiger Umrichter ermöglicht werden. Nur wird im Unterschied zum Stand der Technik hier kein Drehfeld zur Ansteuerung eines Motors erzeugt, sondern es werden zwei Ströme unabhängig voneinander generiert, um ein Magnetlager in Art einer Differenzansteuerung zu betreiben.

Im Folgenden werden drei Ausführungsbeispiele der Erfindung dargestellt.

Es zeigen:

| | |
|---|---|
| Figur 9 | eine erfindungsgemäße Magnetlagersteuereinrichtung mit einem dreiphasigen Umrichter, |
| Figur 10 und 11 | an sich bekannte Stern- bzw. Dreiecksschaltungen, welche zum erfindungsgemäßen Anschluss verwendet werden, |
| Figur 12 | eine erfindungsgemäße Magnetlagersteuereinrichtung, wobei hier der dreiphasige Umrichter sowohl zur Ansteuerung einer Grunderregungswicklung als auch zur Ansteuerung einer Steuererregungswicklung verwendet wird, und |
| Figur 13 | eine zur Figur 12 alternative Ausführungsform, welche besonders vorteilhaft eingesetzt werden kann, wenn die Vormagnetisierungswicklung für einen kleineren Strom als die Steuerwicklung ausgelegt ist. |

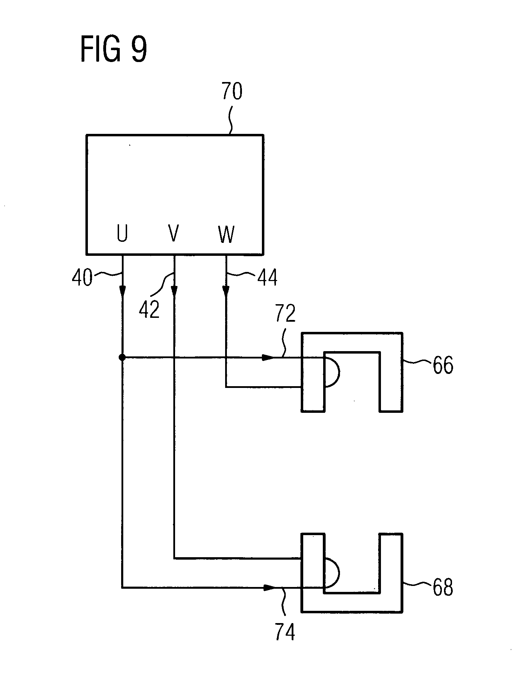

Figur 9 zeigt eine erfindungsgemäße Magnetlagersteuereinrichtung mit einem dreiphasigen Umrichter 70, dessen Phasenstromausgänge U, V und W die Phasenströme 40, 42 und 44 liefern. Das Magnetlager umfasst einen oberen Magnetanker 66 sowie einen unteren Magnetanker 68. Ein Strom 72 fließt hierbei in einer Spule eines Magnetspulenpaares, welche dem oberen Magnetanker 66 zugeordnet ist. Diese Spule wird an den ersten und dritten Phasenstromausgang U, W des Umrichters 70 angeschlossen.

Ein Strom 74 fließt in einer zweiten Spule des Magnetspulenpaares, welche dem unteren Magnetanker 68 zugeordnet ist. Die zweite Spule ist an den ersten Phasenstromausgang U sowie an den zweiten Phasenstromausgang V des Umrichters 70 angeschlossen. Mit einem angenommenen festen Rotorlagewinkel = 0°, die magnetische Achse 36 zeige in Richtung der Phase U, ergeben sich dann die folgenden Phasenausgangsströme 40, 42 und 44:

$$(3) \qquad i_U = i_d$$

$$i_V = -\frac{1}{2} i_d + \cos(30°) \cdot i_q$$

$$i_W = -\frac{1}{2} i_d - \cos(30°) \cdot i_q$$

$$(4) \qquad i_a = -i_W = \frac{1}{2} i_d + \cos(30°) \cdot i_q$$

$$i_b = -i_V = \frac{1}{2} i_d - \cos(30°) \cdot i_q$$

Der Phasenstrom 40 ($i_U$) bildet einen eingeprägten d-Strom. Die beiden anderen Phasenströme 42 und 44 berechnen sich dann wie in den übrigen Gleichungen des Gleichungssystems (3) angegeben.

Somit ergibt sich das Gesamtgleichungssystem (4) für die in der Figur 9 angegebene erfindungsgemäße Verschaltung.

Der Strom $i_a$ entspricht einem Strom 72, welcher in die erste Spule, welche dem oberen Magnetanker 66 zugeordnet ist, fließt. Der Strom $i_b$ beschreibt einen weiteren Strom 74, welcher in die zweite Spule des Magnetspulenpaares fließt.

Aus den Gleichungssystemen (3) und (4) erkennt man, dass über den Strom $i_d$ eine so genannte Vormagnetisierung eingestellt werden kann und dass der Strom $i_q$ den Strom in einer der Spulen erhöht und in der anderen verringert, dass also hierdurch eine resultierende Kraft auf den zu lagernden Gegenstand, bevorzugt einen Rotor, einstellbar ist.

Umrichter nach dem Stand der Technik sind zum Betrieb von symmetrischen Drehstrommotoren ausgelegt. Symmetrisch bedeutet hierbei, dass die Scheinwiderstände zwischen allen drei Klemmen des Umrichters gleich groß sind.

Allerdings ist dies beim erfindungsgemäßen Anschluss des Umrichters an die Magnetlagerspulen nicht der Fall. Wie bereits im Zusammenhang mit den Figuren 7 und 8 gezeigt, kann der erfindungsgemäße Anschluss beispielsweise als unvollständige Sternschaltung aufgefasst werden, wobei in der Phase U keine Induktivität vorhanden ist und die beiden Spulen des Magnetlagerspulenpaares die Induktivitäten in den beiden anderen Phasen V und W bilden. Genauso kann man die Figuren 7 und 8 auch als unvollständige Dreieckschaltung auffassen, wobei keine dritte Induktivität zwischen die Phasen V und W geschaltet ist.

Diese Asymmetrien der Schaltungen haben Auswirkungen auf die Stromregelungen. Die Asymmetrie der unvollständigen Sternschaltung bzw. unvollständigen Dreieckschaltung kann beispielsweise dadurch behoben werden, dass in dem Phasenzweig, welchem im Vergleich zur vollständigen Stern- bzw. Dreieckschaltung ein Scheinwiderstand zur Symmetrie fehlt, eine passive Drossel mit einer Induktivität geschaltet wird, welche der Induktivität einer Spule des Magnetspulenpaares entspricht. Weiterhin ist auch denkbar, die Magnetlagerspulen jeweils zu unterteilen und einen Teilabschnitt davon als die genannte passive Drossel zu benutzen. So gelangt man unter Hinzufügung der genannten passiven Drossel zu einer alternativen Anschlussart des Magnetlagerspulenpaares an einen dreiphasigen Umrichter.

Eine genannte passive Drossel als Bauelement verursacht jedoch Kosten, produziert Verlustwärme und beansprucht Bauraum. Daher wird nachfolgend eine erfindungsgemäße Lösung vorgeschlagen, die unerwünschte Auswirkungen auf den Stromregler infolge der Asymmetrie beseitigt.

Ausgehend von den Figuren 7 und 8 wird zunächst die Auswirkung auf den Stromregler erklärt. Wieder werde angenommen, dass die magnetische Achse 36 eingefroren ist in Richtung der Phase U.

Der d-Strom 60 fließt vom Phasenleiter U zu gleichen Teilen 62 in die Phasenleiter V bzw. W. Dabei fließt kein Strom vom Phasenleiter V zum Phasenleiter W und umgekehrt. Daher ist es im Falle des d-Stromes egal, ob der Zweig zwischen V und W mit einem Bauelement besetzt ist oder nicht. Ein Einfügen der vorgenannten passiven Drossel würde daran nichts ändern. Somit geht für den d-Strom die unvollständige Dreieckschaltung in eine vollständige über. Der Umrichter nimmt im Falle des d-Stromes den fehlenden Zweig nicht wahr, weil in diesem ohnehin kein Strom fließen würde. Für die Stromregelung des d-Stromes ergibt sicdh damit die Gesamtinduktivität einer Dreieckschaltung mit den einzelnen Zweiginduktivitäten L zu einer Gesamtinduktivität von 2/3 x L.

Der q-Strom fließt vom Phasenleiter V zum Phasenleiter W und umgekehrt. Im Phasenleiter U fließt dabei kein Strom. Deshalb ist es für den Fall des q-Stromes egal, ob der Zweig U mit einer Induktivität der Größe L oder mit einem Kurzschluss besetzt ist. Somit geht für den q-Strom die unvollständige Sternschaltung in eine vollständige über. Der Umrichter nimmt im Falle des q-Stromes den kurzgeschlossenen Zweig U nicht wahr, weil in diesem ohnehin kein Strom fließen würde. Für die Stromregelung des q-Stromes ergibt sich damit die Gesamtinduktivität einer Sternschaltung mit den einzelnen Zweiginduktivitäten L zu einer Gesamtinduktivität von 2 x L.

Die vom Umrichter wahrgenommene Induktivität hängt also davon ab, ob der d- oder der q-Strom eingeprägt wird. Rechnerisch ergibt sich ein Unterschied beider Induktivitäten von 1:3. Ebenso unterscheidet sich die Spannung, die notwendig ist, um die jeweilige Stromkomponente d oder q zu ändern. Zur Änderung des q-Stromes wird dreimal so viel Spannung benötigt wie zur Änderung des d-Stromes. Da der Stromregler zum Ändern des Stromes eine Spannung aufschaltet, wird vorgeschlagen, in der Höhe der Spannung zwischen dem d- und dem q-Strom zu unterscheiden.

Erfindungsgemäß umfasst der Umrichter einen Proportionalstromregler, wobei eine Struktur vorgeschlagen wird, in der die Proportionalverstärkung für den d-Strom kleiner als für den q-Strom gewählt wird. Durch die Berücksichtigung des Induktivitätsunterschieds in der Stromregelung kann auf die Ergänzung der unvollständigen Stern- bzw. Dreieckschaltung durch eine passive Drossel verzichtet werden.

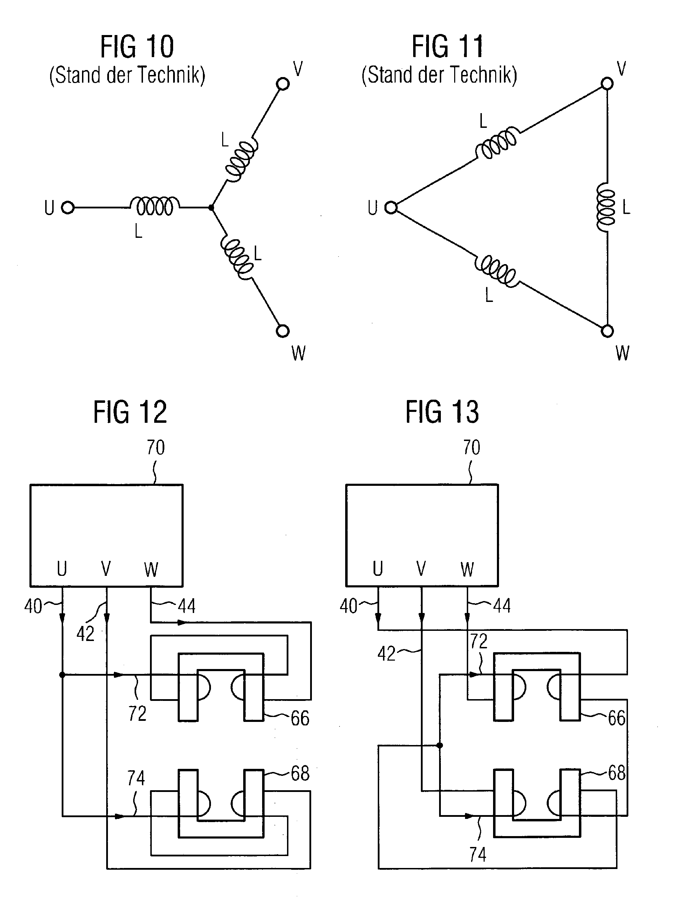

Die Figuren 12 und 13 zeigen nun weitere Schaltungsmöglichkeiten zum Anschluss von Magnetlagern mit vorhandener Vormagnetisierungswicklung an einen dreiphasigen Umrichter.

Falls hierbei die Vormagnetisierungswicklung für einen kleineren Strom ausgelegt ist als die Steuerwicklung, so ist die Ausgestaltung der Figur 13 zu bevorzugen.

Der erfindungsgemäße Anschluss des Umrichters an die Spulen des Magnetspulenpaares des Magnetlagers ergibt sich aus den Figuren 12 bzw. 13 sowie aus den entsprechenden Patentansprüchen.

Zusammengefasst lässt sich die Erfindung folgendermaßen kurz umreißen:

Zur Steuerung von Magnetlagern werden Leistungsverstärker benötigt. Erfindungsgemäß wird die Funktion dieser Leistungsverstärker übernommen durch einen dreiphasigen Umrichter, wobei alle drei Phasenstromausgänge des Umrichters zur Ansteuerung der Spulen des Magnetspulenpaares des Magnetlagers verwendet werden. Die Erfindung macht dabei von der Erkenntnis Gebrauch, dass ein Umrichter nicht nur ein Drehfeld für einen Motor durch unabhängige Einstellung der Phasenströme erzeugen kann, sondern dass sich diese unabhängige Einstellbarkeit der Phasenströme auch zur Ansteuerung eines Magnetlagerspulenpaares nutzen lässt.

## Patentansprüche

1. Verwendung eines dreiphasigen Umrichters (70) zur Steuerung eines Magnetlagers (66, 68), wobei alle drei Phasenströme (40, 42, 44) des Umrichters (70) zur Steuerung des Magnetlagers (66, 68) verwendet werden, wobei der dreiphasige Umrichter (70) einen Proportionalstromregler zur Regelung eines d-Stroms und eines q-Stroms des Umrichters (70) umfasst, wobei eine erste Proportionalverstärkung zur Regelung des d-Stroms kleiner eingestellt wird als eine zweite Proportionalverstärkung zur Regelung des q-Stroms, und wobei das Verhältnis der ersten Proportionalverstärkung zur zweiten Proportionalverstärkung im Bereich von 1:2 bis 1:4 liegt.

2. Verwendung nach Anspruch 1, wobei das Magnetlager (66, 68) eine Grunderregungswicklung (16) und eine Steuererregungswicklung (10) aufweist, und aus den drei Phasenströmen (40, 42, 44) durch Verschaltung mit der Grunderregungswicklung (16) und der Steuererregungswicklung (10) ein Vormagnetisierungsstrom und ein Steuerstrom zur Beaufschlagung der Grunderregungswicklung (16) bzw. der Steuererregungswicklung (10) erzeugt werden.

3. Verwendung nach Anspruch 1, wobei eine Steuererregungswicklung (10) eines oberen Magnetankers (66) des Magnetlagers (66, 68) an einen ersten (U) und einen dritten (W) Phasenstromausgang des dreiphasigen Umrichters (70) und eine Steuererregungswicklung (10) eines unteren Magnetankers (68) des Magnetlagers (66, 68) an den ersten (U) und einen zweiten (V) Phasenstromausgang des dreiphasigen Umrichters (70) angeschlossen sind.

4. Verwendung nach Anspruch 2, wobei die Grunderregungswicklung (16) und die Steuererregungswicklung (10) eines oberen Magnetankers (66) des Magnetlagers (66, 68) in Reihe geschaltet und an einen ersten (U) und einen dritten (W) Phasenstromausgang des dreiphasigen Umrichters (70) angeschlossen sind, und wobei die Grunderregungswicklung (16) und die Steuererregungswicklung (10) eines unteren Magnetankers (68) des Magnetlagers (66, 68) in Reihe geschaltet und an den ersten (U) und einen zweiten (V) Phasenstromausgang des dreiphasigen Umrichters (70) angeschlossen sind.

5. Verwendung nach Anspruch 2, wobei die Grunderregungswicklung (16) eines oberen (66) und eines unteren (68) Magnetankers des Magnetlagers (66, 68) in Reihe geschaltet sind, wobei die Steuererregungswicklung (10) des oberen (66) und unteren (68) Magnetankers des Magnetlagers (66, 68) in Reihe geschaltet sind und wobei die Steuererregungswicklung (10) einen Anzapfpunkt aufweist über welchen ein die Grunderregungswicklung (16) beider Magnetanker (66, 68) durchfließender Strom in die Steuererregungswicklung (10) beider Magnetanker (66, 68) eingespeist wird.

6. Verwendung nach einem der Ansprüche 1 bis 5, wobei das Verhältnis der ersten Proportionalverstärkung zur zweiten Proportionalverstärkung 1:3 ist.

## Claims

1. Use of a three-phase converter (70) for controlling a magnetic bearing (66, 68), wherein all three phase currents (40, 42, 44) of the converter (70) are used to control the magnetic bearing (66, 68) wherein the three-phase converter (70) has a proportional current regulator for regulation of a d-current and of a q-current of the converter (70), wherein a first proportional gain for regulation of the d-current is set to be lower than a second proportional gain for regulation of the q-current, and wherein the ratio of the first proportional gain to the second proportional gain is in the range from 1:2 to 1:4.

2. Use according to Claim 1, wherein the magnetic bearing (66, 68) has a basic field winding (16) and a control field winding (10), and a premagnetization current and a control current for application to the basic field winding (16) and the control field winding (10) respectively are produced from the three phase currents (40, 42, 44) by connection to the basic field winding (16) and the control field winding (10).

3. Use according to Claim 1, wherein a control field winding (10) of an upper magnet armature (66) of the magnetic bearing (66, 68) is connected to a first phase current output (U) and to a third phase current output (W) of the three-phase converter (70), and a control field winding (10) of a lower magnet armature (68) of the magnetic bearing (66, 68) is connected to the first phase current output (U) and to a second phase current output (V) of the three-phase converter (70).

4. Use according to Claim 2, wherein the basic field winding (16) and the control field winding (10) of an upper magnet armature (66) of the magnetic bearing (66, 68) are connected in series and are connected to a first phase current output (U) and to a third phase current output (W) of the three-phase converter, and wherein the basic field winding (16) and the control field winding (10) of a lower magnet armature (68) of the magnetic bearing (66, 68) are connected in series and are connected to the first phase current output (U) and to a second phase current output (V) of the three-phase converter (70).

5. Use according to Claim 2, wherein the basic field winding (16) of an upper magnet armature (66) and of a lower magnet armature (68) of the magnetic bearing (66, 68) are connected in series, wherein the control field winding (10) of the upper magnet armature (66) and of the lower magnet armature (68) of the magnetic bearing (66, 68) are connected in series, and wherein the control field winding (10) has a tapping point via which a current which flows through the basic field winding (16) of both magnet armatures (66, 68) is fed into the control field winding (10) of both magnet armatures (66, 68).

6. Use according to one of Claims 1 to 5, wherein the ratio of the first proportional gain to the second proportional gain is 1:3.

## Revendications

1. Utilisation d'un convertisseur ( 70 ) triphasé pour la commande d'un palier ( 66, 68 ) magnétique, les trois phases ( 40, 42, 44 ) du convertisseur ( 70 ) étant toutes utilisées pour la commande du palier ( 66, 68 ) magnétique, le convertisseur ( 70 ) triphasé comprenant un régleur de courant proportionnel pour la régulation d'un courant d et d'un courant q du convertisseur ( 70 ), une première amplification proportionnelle étant, pour la régulation du courant d, réglée à une valeur plus petite qu'une deuxième amplification proportionnelle pour la régulation du courant q et le rapport de la première amplification proportionnelle à la deuxième amplification proportionnelle allant dans la plage de 1:2 à 1:4.

2. Utilisation suivant la revendication 1, dans laquelle le palier ( 66, 68 ) magnétique a un enroulement ( 16 ) d'excitation de base et un enroulement ( 10 ) d'excitation de commande et il est produit, à partir des trois courants ( 40, 42, 44 ) de phase par câblage avec l'enroulement ( 16 ) d'excitation de base et avec l'enroulement ( 10 ) d'excitation de commande, un courant de prémagnétisation et un courant de commande pour l'alimentation de l'enroulement ( 16 ) d'excitation de base et respectivement de l'enroulement ( 10 ) d'excitation de commande.

3. Utilisation suivant la revendication 1, dans laquelle un enroulement ( 10 ) d'excitation de commande d'une armature ( 16 ) d'aimant supérieure du palier ( 66, 68 ) magnétique est raccordé à une première ( U ) et à une troisième ( W ) sortie de courant de phase du convertisseur ( 70 ) triphasé et un enroulement ( 10 ) d'excitation de commande d'une armature ( 68 ) d'aimant inférieure du palier ( 66, 68 ) magnétique est raccordé à la première ( U ) et à une deuxième ( V ) sortie de courant de phase du convertisseur ( 70 ) triphasé.

4. Utilisation suivant la revendication 2, dans laquelle l'enroulement ( 16 ) d'excitation de base et l'enroulement ( 10 ) d'excitation de commande d'une armature ( 66 ) d'aimant supérieure du palier ( 66, 68 ) magnétique sont montés en série et sont raccordés à une première ( U ) et à une troisième ( W ) sortie de phase du convertisseur ( 70 ) triphasé et dans laquelle l'enroulement ( 16 ) d'excitation de base et l'enroulement ( 10 ) d'excitation de commande d'une armature ( 68 ) d'aimant inférieure du palier ( 66, 68 ) magnétique sont montés en série et sont raccordés à la première ( U ) à une deuxième ( V ) sortie de courant de phase du convertisseur ( 70 ) triphasé.

5. Utilisation suivant la revendication 2, dans laquelle l'enroulement ( 16 ) d'excitation de base d'une armature ( 66 ) d'aimant supérieure et d'une armature d'aimant inférieure ( 68 ) du palier ( 66, 68 ) magnétique sont montés en série, l'enroulement ( 10 ) d'excitation de commande de l'armature (66) supérieure et de l'armature (68) d'aimant inférieure du palier ( 66, 68 ) magnétique étant montés en série et l'enroulement ( 10 ) d'excitation de commande a un point de prise, par lequel un courant, passant dans l'enroulement ( 16 ) d'excitation de base des deux armatures ( 66, 68 ) d'aimant, est injecté dans l'enroulement ( 10 ) d'excitation de commande des deux armatures ( 66, 68 ) d'aimant.

6. Utilisation suivant l'une des revendications 1 à 5, dans laquelle le rapport de la première amplification proportionnelle à la deuxième amplification proportionnelle est de 1:3.

# FIG 1
(Stand der Technik)

$i_0 + i_x$

$i_0 - i_x$

# FIG 2
(Stand der Technik)

# FIG 3
(Stand der Technik)

# FIG 4
(Stand der Technik)

FIG 5

FIG 6

FIG 7

V

62

U

60

62

W

FIG 8

V

64

U

64

W

FIG 9

## FIG 10
(Stand der Technik)

## FIG 11
(Stand der Technik)

## FIG 12

## FIG 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004024883 A1
- WO 9707341 A

- JP 08145056 A